# EUROPEAN PATENT SPECIFICATION

(11) **EP 3 255 305 B1**
(45) Date of publication and mention of the grant of the patent: **23.01.2019**
(21) Application number: 15881312.1
(22) Date of filing: 13.11.2015
(51) Int. Cl.: F16H 19/04, F16H 55/26, F16H 55/10, H02K 1/16, H02K 7/116, H02K 21/22, H02K 1/27, H02K 11/00, F16H 57/04, H02K 1/14

(54) **POWER TRANSMISSION DEVICE**
LEISTUNGSÜBERTRAGUNGSVORRICHTUNG
DISPOSITIF DE TRANSMISSION D'ÉNERGIE

(30) Priority: 02.02.2015 KR 20150015889
(43) Date of publication of application: 13.12.2017
(73) Proprietor: Sejin-igb Co., Ltd., Asan-si, Chungcheongnam-do 31550 (KR)
(72) Inventor: LIM, Sun Ho, Asan-si Chungcheongnam-do 31533 (KR)
(74) Representative: Brann AB
(86) International application number: PCT/KR2015/012198
(87) International publication number: WO 2016/125994

(56) References cited:
- JP-A- 2004 056 932
- JP-A- 2011 229 227
- JP-U- H0 662 760
- KR-B1- 101 009 742
- KR-B1- 101 101 900
- US-A1- 2002 024 267
- US-A1- 2013 186 213

## Description

### [TECHNICAL FIELD]

The present invention relates to a power transmission device, and more particularly, to a power transmission device which may be easily applied with no restriction to semiconductor or flat display equipment requiring compact parts because not only the overall height of a device, but also an exterior size thereof may be remarkably reduced.

### [BACKGROUND ART]

Power transmission devices are a series of devices implementing a linear motion, a curved motion, a circular motion, etc. of a device by using rotational power of a motor.

The power transmission devices have been widely used for various industrial machines including semiconductor equipment, flat display equipment for LCDs, PDPs, OLEDs, etc. Such power transmission devices have been already filed by and registered to the present applicant.

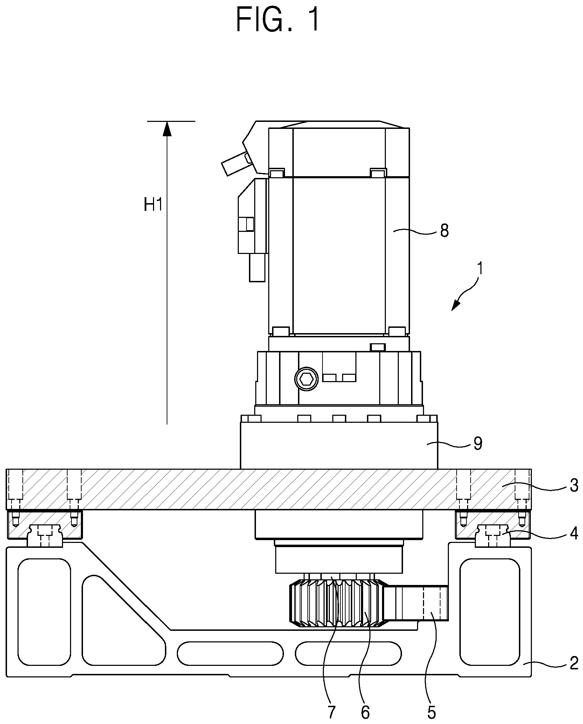

FIG. 1 is a side view illustrating a configuration of a power transmission device according to the related art in a use state.

Referring to FIG. 1, the power transmission device 1 according to the related art may be partially coupled to a slider 3, for example, to allow the slider 3 coupled to a base plate 2 in a structure of a rail 4 to have a linear motion.

For the linear motion of the slider 3 with respect to the base plate 2, the power transmission device 1 connected to the slider 3 may include a pinion 6 or a pin gear that is engaged with a rack 5 fixed to an area of the base plate 2. A separate motor 8 is provided outside the pinion 6 and connected to the pin gear 6.

The pinion 6 is coupled to an end portion of a shaft 7 extending outwardly from the power transmission device 1 and engaged with the rack 5 during the assembly of the device of FIG. 1.

In the above structure, when a motor 8 is driven, the shaft 7 is rotated based on interactions of built-in parts of the power transmission device 1 and thus the pinion 6 is rotated.

As the pinion 6 is engaged with the rack 5 that is positionally fixed, the pinion 6 is consequently rotated, performing a linear motion along a lengthwise direction of the rack 5, and thus the linear motion of the slider 3 with respect to the base plate 2 may be implemented.

Accordingly, when a desired part or apparatus is mounted on the slider 3, the part or apparatus may perform a linear motion.

Accordingly, when a desired part or apparatus is mounted on the slider 3, the part or apparatus may perform a linear motion.

The structure of the power transmission device 1 of FIG. 1 is one of the most used shapes at sites. Since the motor 8 is directly coupled to a rotation shaft of the pinion 6 with a decelerator 9, the overall height H1 of the power transmission device 1 may be increased.

When the overall height HI of the power transmission device 1 is increased as in the related art, the power transmission device 1 becomes huge in size accordingly and thus there may be some restrictions in the application of the power transmission device 1 to compact equipment such as an INDEX that is widely used for semiconductor or flat display equipment. In this regard, there is a demand for complementation for the structure of a power transmission device.

US 2013/186213 A1, which shows all the features of the preamble according to claim 1, discloses a power transmission device including an input gear, a planetary gear train, a ring gear and a main frame.

US 2002/024267 A1 discloses a motor-driven system having a function as an optimum actuator for such driving, which is provided with a stator and an outer rotor type permanent magnet rotor.

### [DETAILED DESCRIPTION OF THE INVENTIVE CONCEPT]

### [TECHNICAL PROBLEM]

It is an object of the present invention to provide a power transmission device which may be easily applied with no restriction to semiconductor or flat display equipment requiring compact parts because not only the overall height of a device, but also an exterior size thereof may be remarkably reduced.

The problem is solved by a power transmission device according to claim 1.

Preferred embodiments are laid down in the dependent claims.

According to the present invention, since not only the overall height of a device, but also an exterior size thereof may be remarkably reduced, the power transmission device may be easily applied with no restriction to semiconductor or flat display equipment requiring compact parts.

### [DESCRIPTION OF THE DRAWINGS]

FIG. 1 is a side view illustrating a configuration of a power transmission device according to the related art in a use state.
FIG. 2 is a power transmission device according to an embodiment of the present invention.
FIG. 3 is a schematic structural view of the power transmission device of FIG. 2.
FIG. 4 is an exploded perspective view of a power transfer pin and a pin rotation support portion.
FIG. 5 is a cross-sectional view taken along a line A-A of FIG. 3.
FIG. 6 is an enlarged view of an external rotor motor portion of FIG. 5.
FIG. 7 illustrates a modified example of the power transfer pin.

### [BEST MODE]

According to an aspect of the present invention, a power transmission device includes a plurality of power transfer pins mutually corresponding to a tooth shape formed on an outer gear to move the outer gear and having an arrangement structure of a circular shape; a pin rotation support portion connected to the plurality of power transfer pins and rotatably supporting the plurality of power transfer pins; and an external rotor motor portion arranged inside in a radial direction of the pin rotation support portion and connected to the pin rotation support portion, and generating rotational power to rotate the pin rotation support portion arranged outside.

The external rotor motor portion may include a rotor connected to the pin rotation support portion inside in the radial direction of the pin rotation support portion and rotating with the pin rotation support portion; and a stator fixedly arranged inside a radial direction of the rotor and rotating the rotor by an applied current.

The pin rotation support portion may rotatably support the power transfer pin and including a rotor connection body forming one body with the rotor.

The rotor connection body may be provided in a pair, each rotor connection body arranged at each of opposite end portions of the power transfer pins and connected to the plurality of power transfer pins.

The pin rotation support portion may further include a plurality of pin support bearings arranged at many as the number of the plurality of power transfer pins at equiangular intervals along a circumferential direction of the rotor connection body, and supporting a rotation motion of the plurality of power transfer pins.

The pin rotation support portion may further include a plurality of oil seals provided corresponding to the plurality of pin support bearings one by one and seals a pin insertion support hole in the rotor connection body in which the plurality of power transfer pins are inserted and supported.

The external rotor motor portion may further include a fixed shaft arranged inside the stator.

The power transmission device may further include an absolute position sensor coupled to an end portion of the fixed shaft and detecting absolute positions of the plurality of power transfer pins.

The power transmission device may further include a closing cap coupled to a periphery of the external rotor motor portion and protecting the external rotor motor portion.

The power transmission device may further include a heat sink arranged around the plurality of power transfer pins and radiating heat generated from the external rotor motor portion.

The power transmission device may further include a control circuit provided in the heat sink.

An air flow space portion for air flow may be formed between the external rotor motor portion and the control circuit in the heat sink.

The outer gear may be one of a rack, an external gear, and an internal gear.

### [MODE OF THE INVENTIVE CONCEPT]

The attached drawings for illustrating preferred embodiments of the present invention are referred to in order to gain a sufficient understanding of the present invention the merits thereof, and the objectives accomplished by the implementation of the present invention, which is defined by the present claims.

Hereinafter, the present inventive concept will be described in detail by explaining preferred embodiments of the invention with reference to the attached drawings. Like reference numerals in the drawings denote like elements.

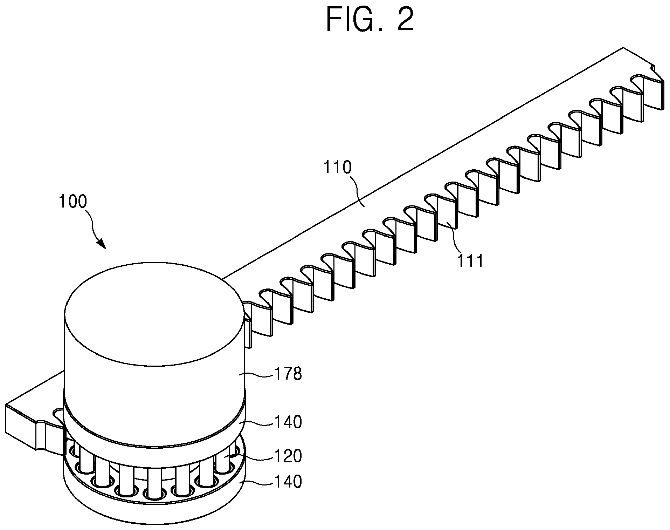

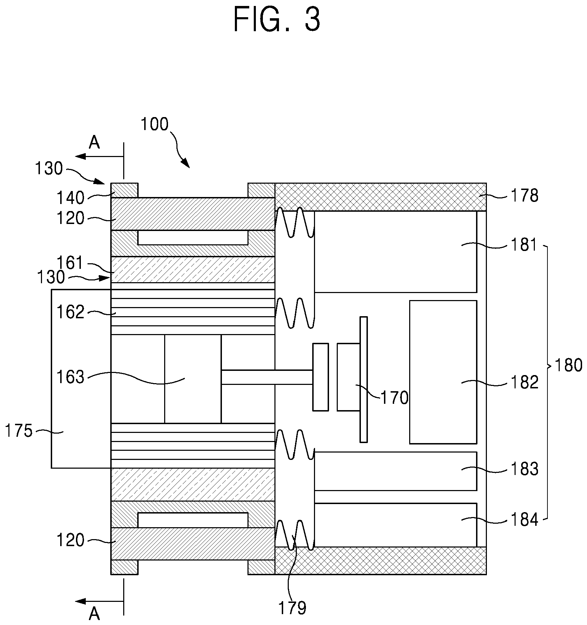

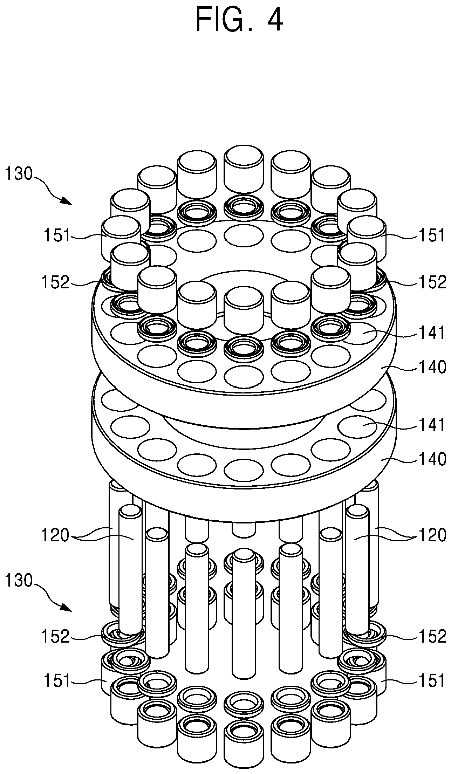

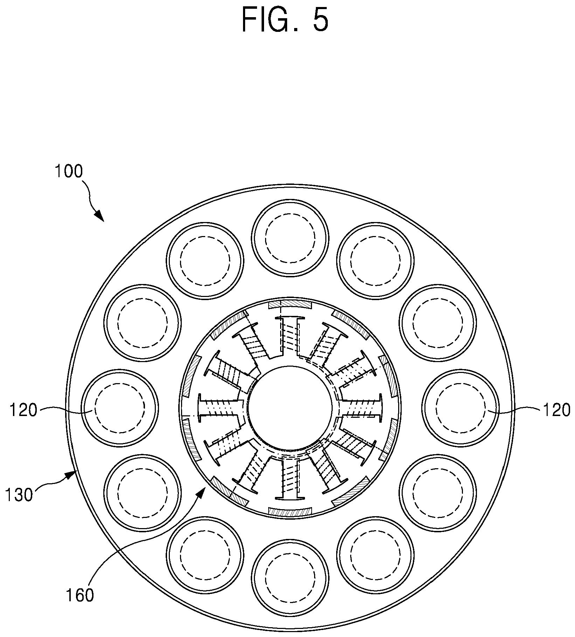

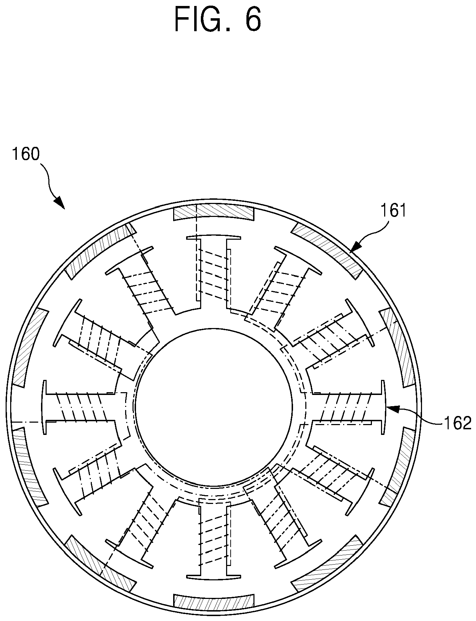

FIG. 2 is a power transmission device according to an embodiment of the present invention. FIG. 3 is a schematic structural view of the power transmission device of FIG. 2. FIG. 4 is an exploded perspective view of a power transfer pin and a pin rotation support portion. FIG. 5 is a cross-sectional view taken along a line A-A of FIG. 3. FIG. 6 is an enlarged view of an external rotor motor portion of FIG. 5.

Referring to these drawings, a power transmission device according to the present embodiment may be easily applied with no restriction to semiconductor or flat display equipment requiring compact parts because not only the overall height of a device, but also an exterior size thereof may be remarkably reduced. The power transmission device may include a plurality of power transfer pins 120 having an arrangement structure of a circular shape and moving a rack 110 as an output gear mutually engaged via a rack tooth shape 111 formed in the rack 110, a pin rotation support portion 130 rotatably supporting the power transfer pins 120, and an external rotor motor portion 160 arranged inside in a radial direction of the pin rotation support portion 130 and generating rotational power to rotate the pin rotation support portion 130.

For reference, although the rack 110 is disclosed as an outer gear in the present embodiment, the outer gear may be an external gear or an internal gear having a circular shape.

For example, when the outer gear is the rack 110 as illustrated in FIG. 2, the rack 110 may perform a linear motion as the power transmission device 100 according to the present embodiment is driven.

In contrast, when the outer gear is an external gear or an internal gear, the external gear or the internal gear may perform a rotational motion as the power transmission device 100 according to the present embodiment is driven.

A rack tooth shape 111 is formed at one side of the rack 110. The rack tooth shape 111 is continuously and uniformly formed at one side of the rack 110 along a lengthwise direction of the rack 110.

The rack tooth shape 111 formed on the rack 110 may be any one of a trochoid tooth shape, a cycloid tooth shape, and an involute tooth shape.

As such, the power transfer pins 120 are provided such that the rack 110 may perform a linear motion. In the present embodiment, the power transfer pins 120, as a power source for moving the rack 110, performs a rotational motion in place corresponding to the rack tooth shape 111 of the rack 110. The power transfer pins 120 may have an arrangement structure of a circular shape.

Next, as illustrated in detail in FIG. 4, the pin rotation support portion 130, as a structure connected to the power transfer pins 120 having an arrangement structure of a circular shape, rotatably support the power transfer pins 120.

The pin rotation support portion 130 may include a rotor connection body 140, a pin support bearing 151, and an oil seal 152.

The rotor connection body 140 is a structure rotatably supporting the power transfer pins 120 and forming one body with a rotor 161.

The rotor connection body 140 is arranged in a pair at opposite end portions of the power transfer pins 120 and connected to the power transfer pins 120.

In other words, the rotor connection body 140 is arranged in a pair spaced apart in parallel from each other by a length of the power transfer pins 120 or less. The pair of rotor connection bodies 140 are connected to the opposite end portions of the power transfer pins 120 and rotatably supporting the power transfer pins 120.

A plurality of pin insertion support holes 141, in which the power transfer pins 120 are inserted and supported, are provided in the rotor connection body 140 at equiangular intervals along a circumferential direction.

The pin support bearing 151 is arranged as many as the number of the power transfer pins 120 at the equiangular intervals along the circumferential direction of the rotor connection body 140, and support a rotation motion of the power transfer pins 120.

The pin support bearing 151 may employ various rolling bearings having superior rigidity including a ball bearing.

The oil seal 152 is provided corresponding to the pin support bearing 151 one by one and seals the pin insertion support hole 141 in the rotor connection body 140 in which the power transfer pins 120 are inserted and supported.

In the present embodiment, since the rotor connection body 140 is provided in a pair, the pin support bearing 151 and the oil seal 152 are applied to each of the pair of the rotor connection bodies 140.

In other words, the rotor connection body 140, the pin support bearing 151, and the oil seal 152 may form a symmetric structure with respect to the power transfer pins 120. Accordingly, an assembly work may be easy.

The external rotor motor portion 160 is arranged inside in the radial direction of arranged inside in the radial direction of the pin rotation support portion 130 and connected to the pin rotation support portion 130, and generates rotational power to rotate the pin rotation support portion 130 arranged outside the external rotor motor portion 160.

In other words, in the power transmission device 100 of the present embodiment, while the external rotor motor portion 160 is arranged inside the pin rotation support portion 130, the external rotor motor portion 160 rotates the pin rotation support portion 130 and the power transfer pins 120 that are structures arranged outside the external rotor motor portion 160.

In this case, not only a complicated structure of directly connecting the separate motor 8 as illustrated in FIG. 1 is not needed, but also the overall height of a device as well as the exterior size thereof may be remarkably reduced and thus the power transmission device may be easily applied to semiconductor or flat display equipment requiring compact parts, in particular to compact equipment such as an INDEX.

The external rotor motor portion 160 is connected to the pin rotation support portion 130 inside in the radial direction of the pin rotation support portion 130, and may include the rotor 161 rotated with the pin rotation support portion 130 and a stator 162 fixedly arranged inside in a radial direction of the rotor 161 and rotating the rotor 161 by an applied current.

The rotor 161 is provided as a magnet, and the stator 162 is provided as a coil structure with an electric line wound therearound.

Accordingly, as illustrated in FIG. 6, when current is applied to the stator 162, a magnetic force is generated according to the Fleming's law. By alternately changing the polarity of current, the rotor 161 that is a magnet is rotated according to the polarity of induced magnetism.

Since the rotor connection body 140 is coupled to the rotor 161, as the rotor 161 rotates, the rotor connection body 140 rotates together and thus the power transfer pins 120 may be induced to be rotated.

A fixed shaft 163 is provided inside the stator 162. Unlike the rotor 161 that is rotatable, the fixed shaft 163 is fixed without being rotated.

Accordingly, the fixed shaft 163 may be provided with a senor such as an absolute position sensor 170. In the present embodiment, the absolute position sensor 170 is coupled to an end of the fixed shaft 163 and senses absolute positions of the power transfer pins 120. For example, the absolute positions are misaligned, a control of, for example, forcibly stopping the motion of the external rotor motor portion 160 may be performed.

A closing cap 175 for protecting the external rotor motor portion 160 is provided around the external rotor motor portion 160. The closing cap 175 may protect the external rotor motor portion 160. When the closing cap 175 is open, a path for maintenance and repair of the external rotor motor portion 160 may be formed.

A heat sink 178 for radiating heat generated from the external rotor motor portion 160 is provided around the power transfer pins 120 at an opposite side of the closing cap 175.

The heat sink 178 may have a housing structure in which various control circuits 180 for controlling the power transmission device 100 according to the present embodiment are provided.

The control circuits 180 may include a power circuit 181, a wireless communication circuit 182, an MCU circuit 183, and an external rotor motor portion drive circuit 184.

In the present embodiment, the power circuit 181, the wireless communication circuit 182, the MCU circuit 183, and the external rotor motor portion drive circuit 184 are all illustrated to be included, but some of them may be excluded in the application.

An air flow space portion 179 for air flow is formed in the heat sink 178 between the external rotor motor portion 160 and the control circuits 180. The air flow space portion 179 may prevent a phenomenon that the heat generated from the external rotor motor portion 160 is directly transferred to the control circuits 180 and thus the control circuits 180 is damaged.

The operation of the power transmission device 100 configured as above is described below.

Current is applied to the stator 162 when the power transmission device 100 is assembled as illustrated in FIG. 2, that is, to the rack 110.

When current is applied to the stator 162, a magnetic force is generated according to the Fleming's law. By alternately changing the polarity of current, the rotor 161 that is a magnet is rotated according to the polarity of induced magnetism.

Since the rotor connection body 140 is coupled to the rotor 161, as the rotor 161 rotates, the rotor connection body 140 rotates together and thus the power transfer pins 120 may be induced to be rotated.

Accordingly, as the power transfer pins 120 rotate, each of the power transfer pins 120 is engaged with the rack tooth shape 111 of the rack 110 performing interaction therebetween, and thus the rack 110 may perform a linear motion.

According to the power transmission device 100 of the present embodiment having the above structure and operation, since not only the overall height of a device, but also an exterior size thereof may be remarkably reduced, the power transmission device 100 may be easily applied with no restriction to semiconductor or flat display equipment requiring compact parts.

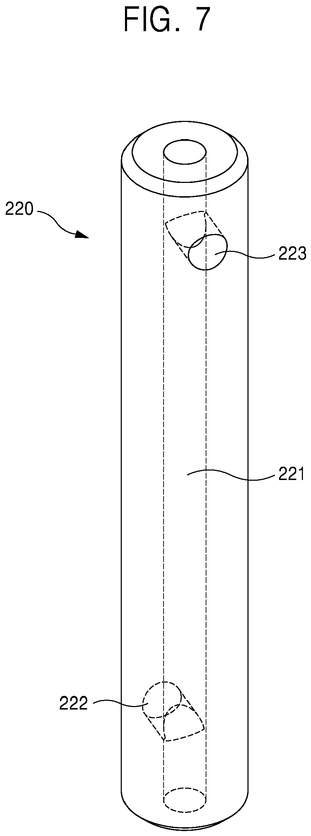

FIG. 7 illustrates a modified example of the power transfer pin.

Unlike the above-described embodiments, a power transfer pin 220 may be applied in a structure of capable of lubricating as illustrated in FIG. 7.

In other words, a lubricant flow hole 221 in which a lubricant flows in a lengthwise direction of the power transfer pin 220 may be provided in the power transfer pin 220.

A lubricant outlet 222 and a lubricant inlet 223 connected to the lubricant flow hole 221, through which the lubricant enters or exits, may be provide in a side wall of the power transfer pin 220.

The lubricant outlet 222 and the lubricant inlet 223 may be arranged in opposite directions along a radial direction of the power transfer pin 220 in areas at opposite ends of the lubricant flow hole 221. Since the present disclosure is not limited thereto, the lubricant outlet 222 and the lubricant inlet 223 may be arranged in the same direction.

When the power transfer pin 220 having the above-described lubrication structure is employed, the power transfer pin 220 may be smoothly rotated, which may be helpful for the movement of equipment.

According to the present embodiment, even when the power transfer pins 220 are employed, since not only the overall height of a device, but also an exterior size thereof may be remarkably reduced, the power transmission device may be easily applied with no restriction to semiconductor or flat display equipment requiring compact parts.

### [INDUSTRIAL APPLICABILITY]

The power transmission device according to the present invention may be used for various machine tools requiring a rotational motion or a linear motion, industrial machinery, semiconductor or flat display manufacturing facilities, and various kinds of logistics transfer facilities.

## Claims

1. A power transmission device (100) comprising:
a plurality of power transfer pins (120) mutually corresponding to a tooth shape (111) formed on an outer gear (110) to move the outer gear and having an arrangement structure of a circular shape; and
a pin rotation support portion (130) connected to the plurality of power transfer pins (120) and rotatably supporting the plurality of power transfer pins; **charactreized by**: further comprising:
an external rotor motor portion (160) arranged inside in a radial direction of the pin rotation support portion (130) and connected to the pin rotation support portion, and generating rotational power to rotate the pin rotation support portion arranged outside,
wherein the external rotor motor portion (160) comprises:
a rotor (161) connected to the pin rotation support portion (130) inside in the radial direction of the pin rotation support portion and rotating with the pin rotation support portion;
a stator (162) fixedly arranged inside a radial direction of the rotor (161) and rotating the rotor by an applied current;
a fixed shaft (163) arranged inside the stator (162); and
an absolute position sensor (170) coupled to an end portion of the fixed shaft (163) and detecting absolute positions of the plurality of power transfer pins (120).

2. The power transmission device of claim 1, wherein the pin rotation support portion (130) rotatably supports the power transfer pin (120) and comprising a rotor connection body (140) forming one body with the rotor (161).

3. The power transmission device of claim 2, wherein the rotor connection body (140) is provided in a pair, each rotor connection body arranged at each of opposite end portions of the power transfer pins (120) and connected to the plurality of power transfer pins.

4. The power transmission device of claim 2, wherein the pin rotation support portion (130) further comprises a plurality of pin support bearings arranged at many as the number of the plurality of power transfer pins (120) at equiangular intervals along a circumferential direction of the rotor connection body (140), and supporting a rotation motion of the plurality of power transfer pins.

5. The power transmission device of claim 4, wherein the pin rotation support portion (130) further comprises a plurality of oil seals (152) provided corresponding to the plurality of pin support bearings (151) one by one and seals a pin insertion support hole (141) in the rotor connection body (140) in which the plurality of power transfer pins (120) are inserted and supported.

6. The power transmission device of claim 1, further comprising a closing cap (175) coupled to a periphery of the external rotor motor portion (160) and protecting the external rotor motor portion.

7. The power transmission device of claim 1, further comprising a heat sink (178) arranged around the external rotor motor portion (160) and radiating heat generated from the external rotor motor portion (160).

8. The power transmission device of claim 7, further comprising a control circuit (180) provided in the heat sink (178).

9. The power transmission device of claim 8, wherein an air flow space portion (179) for air flow is formed between the external rotor motor portion (160) and the control circuit (180) in the heat sink (178).

10. The power transmission device of claim 1, wherein the outer gear (110) is one of a rack, an external gear, and an internal gear.

## Patentansprüche

1. Kraftübertragungsvorrichtung (100), umfassend:
eine Vielzahl von Kraftübertragungsstiften (120), die einer Zahnform (111) entsprechen, die an einem äußeren Zahnrad (110) gebildet ist, um das äußere Zahnrad zu bewegen, und die eine Anordnungsstruktur einer Kreisform aufweisen; und
einen Stift-Rotationsstützabschnitt (130), der mit der Vielzahl von Kraftübertragungsstiften (120) verbunden ist und die Vielzahl von Kraftübertragungsstiften drehbar stützt; **gekennzeichnet, durch:** weiter umfassend:
einen externen Rotormotorabschnitt (160), der im Inneren in einer radialen Richtung des Stift-Rotationsstützabschnitts (130) angeordnet ist und mit dem Stift-Rotationsstützabschnitt verbunden ist und der eine Rotationskraft erzeugt, um den außen angeordneten Stift-Rotationsstützabschnitt zu drehen,
wobei der externe Rotormotorabschnitt (160) umfasst:
einen Rotor (161), der mit dem Stift-Rotationsstützabschnitt (130) im Inneren in der radialen Richtung des Stift-Rotationsstützabschnitts verbunden ist und sich mit dem Stift-Rotationsstützabschnitt dreht;
einen Stator (162), der im Inneren einer radialen Richtung des Rotors (161) fest angeordnet ist und den Rotor durch einen angelegten Strom dreht;
eine feststehende Welle (163), die im Inneren des Stators (162) angeordnet ist; und
einen Absolutpositionssensor (170), der mit einem Endabschnitt der feststehenden Welle (163) gekoppelt ist und Absolutpositionen der Vielzahl von Kraftübertragungsstiften (120) erfasst.

2. Kraftübertragungsvorrichtung nach Anspruch 1, wobei der Stift-Rotationsstützabschnitt (130) den Kraftübertragungsstift (120) drehbar stützt und einen Rotorverbindungskörper (140) umfasst, der einen Körper mit dem Rotor (161) bildet.

3. Kraftübertragungsvorrichtung nach Anspruch 2, wobei der Rotorverbindungskörper (140) in einem Paar bereitgestellt ist, wobei jeder Rotorverbindungskörper an jedem von gegenüberliegenden Endabschnitten der Kraftübertragungsstifte (120) angeordnet ist und mit der Vielzahl von Kraftübertragungsstiften verbunden ist.

4. Kraftübertragungsvorrichtung nach Anspruch 2, wobei der Stift-Rotationsstützabschnitt (130) weiter eine Vielzahl von Stift-Stützlagern umfasst, von denen so viele wie die Anzahl der Vielzahl von Kraftübertragungsstiften (120) in gleichwinkligen Abständen entlang einer Umfangsrichtung des Rotorverbindungskörpers (140) angeordnet sind und die eine Drehbewegung der Vielzahl von Kraftübertragungsstiften stützen.

5. Kraftübertragungsvorrichtung nach Anspruch 4, wobei der Stift-Rotationsstützabschnitt (130) weiter eine Vielzahl von Öldichtungen (152) umfasst, die entsprechend der Vielzahl von Stift-Stützlagern (151) einzeln bereitgestellt sind und ein Stifteinsetzstützloch (141) in dem Rotorverbindungskörper (140) abdichten, in dem die Vielzahl von Kraftübertragungsstiften (120) eingesetzt und gestützt ist.

6. Kraftübertragungsvorrichtung nach Anspruch 1, weiter umfassend eine Schließkappe (175), die mit einem Umfang des externen Rotormotorabschnitts (160) gekoppelt ist und den externen Rotormotorabschnitt schützt.

7. Kraftübertragungsvorrichtung nach Anspruch 1, weiter umfassend eine Wärmesenke (178), die um den externen Rotormotorabschnitt (160) herum angeordnet ist und von dem externen Rotormotorabschnitt (160) erzeugte Wärme abstrahlt.

8. Kraftübertragungsvorrichtung nach Anspruch 7, weiter umfassend eine Steuerschaltung (180), die in der Wärmesenke (178) bereitgestellt ist.

9. Kraftübertragungsvorrichtung nach Anspruch 8, wobei ein Luftströmungsraumabschnitt (179) für Luftströmung zwischen dem externen Rotormotorabschnitt (160) und der Steuerschaltung (180) in der Wärmesenke (178) gebildet ist.

10. Kraftübertragungsvorrichtung nach Anspruch 1, wobei das äußere Zahnrad (110) eines von einer Zahnstange, einem Außenzahnrad und einem Innenzahnrad ist.

## Revendications

1. Dispositif de transmission de puissance (100) comprenant :
plusieurs tiges de transfert de puissance (120) correspondant mutuellement à une forme en dent (111) formée sur un engrenage extérieur (110) pour déplacer l'engrenage extérieur et ayant une structure d'agencement de forme circulaire ; et
une partie de support en rotation de tiges (130) reliée aux différentes tiges de transfert de puissance (120) et servant de support en rotation aux différentes tiges de transfert de puissance ; **caractérisé en ce qu'**il comprend en outre :
une partie de moteur à rotor externe (160) agencée à l'intérieur et dans une direction radiale de la partie de support en rotation de tiges (130) et reliée à la partie de support en rotation de tiges, et générant une puissance de rotation pour faire tourner la partie de support en rotation de tiges agencée à l'extérieur,
dans lequel la partie de moteur à rotor externe (160) comprend :
un rotor (161) relié à la partie de support en rotation de tiges (130) à l'intérieur dans la direction radiale de la partie de support en rotation de tiges et tournant avec la partie de support en rotation de tiges ;
un stator (162) agencé de manière fixe à l'intérieur d'une direction radiale du rotor (161) et faisant tourner le rotor par un courant appliqué ;
un arbre fixe (163) disposé à l'intérieur du stator (162) ; et
un capteur de position absolue (170) couplé à une partie d'extrémité de l'arbre fixe (163) et détectant les positions absolues de la pluralité de tiges de transfert de puissance (120).

2. Dispositif de transmission de puissance selon la revendication 1, dans lequel la partie de support en rotation de tiges (130) sert de support de manière rotative à la tige de transfert de puissance (120) et comprend un corps de liaison de rotor (140) formant un corps avec le rotor (161).

3. Dispositif de transmission de puissance selon la revendication 2, dans lequel le corps de liaison de rotor (140) est prévu par paire, chaque corps de liaison de rotor étant agencé à chacune de parties d'extrémité opposées des tiges de transfert de puissance (120) et relié aux différentes tiges de transfert de puissance.

4. Dispositif de transmission de puissance selon la revendication 2, dans lequel la partie de support en rotation de tiges (130) comprend en outre plusieurs paliers de support de tiges agencés en nombre égal au nombre des différentes tiges de transfert de puissance (120) à des intervalles équiangulaires le long d'une direction circonférentielle du corps de liaison de rotor (140), et supportant un mouvement de rotation des différentes tiges de transfert de puissance.

5. Dispositif de transmission de puissance selon la revendication 4, dans lequel la partie de support en rotation de tiges (130) comprend en outre plusieurs joints d'étanchéité à l'huile (152) ménagés correspondants aux différents paliers de support de tiges (151) un à un et scelle un orifice de support d'insertion de tiges (141) dans le corps de liaison de rotor (140) dans lequel les différentes tiges de transfert de puissance (120) sont insérées et supportées.

6. Dispositif de transmission de puissance selon la revendication 1, comprenant en outre un capot de fermeture (175) couplé à une périphérie de la partie de moteur à rotor externe (160) et protégeant la partie de moteur à rotor externe.

7. Dispositif de transmission de puissance selon la revendication 1, comprenant en outre un dissipateur de chaleur (178) disposé autour de la partie de moteur à rotor externe (160) et rayonnant de la chaleur générée depuis la partie de moteur à rotor externe (160).

8. Dispositif de transmission de puissance selon la revendication 7, comprenant en outre un circuit de commande (180) prévu dans le dissipateur de chaleur (178).

9. Dispositif de transmission de puissance selon la revendication 8, dans lequel une partie à espace d'écoulement d'air (179) destinée à l'écoulement d'air est formée entre la partie de moteur à rotor externe (160) et le circuit de commande (180) dans le dissipateur de chaleur (178).

10. Dispositif de transmission de puissance selon la revendication 1, dans lequel l'engrenage externe (110) est l'un parmi une crémaillère, un engrenage externe et un engrenage interne.
